# EUROPEAN PATENT SPECIFICATION

(11) **EP 3 053 638 B1**
(45) Date of publication and mention of the grant of the patent: **12.06.2019**
(21) Application number: 15154339.4
(22) Date of filing: 09.02.2015
(51) Int. Cl.: B01D 59/04, B01D 59/30, B01D 59/50, C01B 4/00, G21C 19/307, G21F 9/04, G21F 9/06, G21F 9/08, C02F 1/04, C02F 1/461, C02F 101/00, G21G 1/00

(54) **Integrated device and process for the treatment and the tritium recovery from tritiated water**
Integrierte Vorrichtung und Verfahren zur Behandlung und Wiedergewinnung von Tritium aus Tritiumwasser
Dispositif intégré et procédé pour le traitement et la récupération de tritium d'eau tritiée

(43) Date of publication of application: 10.08.2016
(73) Proprietor: Karlsruher Institut für Technologie, 76131 Karlsruhe (DE)
(72) Inventor: Cristescu, Ion, 76135 Karlsruhe (DE)
(74) Representative: Fitzner, Uwe

(56) References cited:
- EP-A2- 1 736 439
- WO-A2-2014/172360
- US-A1- 2011 027 165

## Description

The instant invention concerns an improved device and an improved process for the treatment of tritiated water and the recovery of tritium.

### Background of the invention:

During the operation of the pressurised water reactors (PWR's) and any tritium processing plants, and systems, significant amount of tritiated water is continuously generated. As tritium has potential to be used in various scientific and commercial applications, beside the benefits related to the treatment of tritiated liquid wastes, the recovery of tritium is of high interest. Particular cases are the fusion devices based on deuterium-tritium mixture fuel for the fusion reaction. The treatment of the tritiated water aiming to remove tritium down to levels that allow discharging the generated effluents and particularly water into the environment is of high interest both for the environmental protection point of view and also for the public acceptance of the nuclear technologies. Depending on the amount of tritiated water that needs to be processed, the tritium concentration and also the deuterium concentration that may cover a wide range from natural level (i.e. 2x10⁻¹⁷ for T and 1.4x10⁻⁴ for D) up to tens of percentages, various combinations of technologies can be developed as can be seen for example from EP 1 736 439 A2, WO 2014/172360 A2, US 2011/0027165 A1, US 2013/0336870 A1 or WO 2011/123851.

Applications based on the following processes in view of water detritiation have been implemented with various detritiation performances:
- One of the most suitable technologies relevant for industrial scale application is the water distillation under vacuum. Main product is the tritium depleted water that may be discharged into the environment and as a by-product lower amounts of water but having tritium concentration typically in the range of 10² - 10⁵ higher than the tritium concentration in the feed are generated. Therefore additional water decontamination and tritium recovery processes have to be implemented for this stream such as to allow water release in the environment.
- Tritiated hydrogen has a much lower chemical toxicity in comparison with tritiated water. Therefore, processes such as to transfer tritium from water, HTO form, to gaseous form HT have been developed, i.e. processes based on Combined Electrolysis Catalytic Exchange (CECE) system. In such a process the water is decomposed in its constituents, hydrogen and oxygen, and after processing within one or a cascade of reactive distillation columns, the hydrogen and oxygen effluents virtually tritium free can be directly discharged into the environment. Beside the dischargeable effluents, a gaseous product with high tritium concentration is further processed typically by cryogenic distillation. In a cryogenic distillation system tritium is enriched and finally recovered as molecular tritium, T2-form, for further use. Several configurations of cryogenic distillation systems that can achieve tritium enrichment up to 99% have been developed.

The storage and the processing of the tritiated water is a concern primarily due to the high half time decay of tritium (about 12 years) and also due to the associated hazards for processing radioactive liquid waste. Radioactive liquid waste can also comprise the tritiated electrolyte from the electrolyser, wherein an alkali type electrolyser is used. Decontamination of this type of mixed waste (i.e., comprising in addition to tritiated water also for example tritiated sodium hydroxide) imply additional technological challenges. In addition, the life time of the main components for tritium processing and the required qualifications represents a concern both from the technical and monetary points of view. As an example related to the life time of the main components, one of the main issues of concern is the permeation membrane in the cases wherein a solid polymer elctrolyser is used. In this case, mixed water is also created comprising in addition to tritiated water also tritiated organic compounds. Due to the fact that the actual nuclear power plants and the future fusion devices will generate significant amounts of tritiated water these problems will even increase.

There are only few places in the world where tritium processing activities have been developed and consequently low amount of tritiated water was generated.

As far as tritiated water processing is concerned, only detritiation facilities for processing heavy water from the CANDU reactor have been developed at industrial scale.

However as future demands will increase, new devices and processes that improve upon the existing ones are needed.

### Object of the invention:

It was an object of the instant invention to provide a method which does not show the disadvantages and/or is less cumbersome than the prior art.

### Summary of the invention:

The object of the instant invention has been solved by the embodiments described below and those outlined in the claims.

More specifically, the instant invention provides a process and device for water detritiation systems which mitigate the radiological hazards and offers investment and operation costs reduction. Beside the application in power plants the inventive concept gives solution also for the treatment of the tritiated water generated during the operation of all tritium processing facilities.

The invention is referring to systems and methods for the treatment of tritiated water and consequently for the tritium recovery. In particular, the inventive concept includes systems and processes for the treatment of the water from nuclear facilities, more particular nuclear reactors and fusion reactors. The main characteristics of the fluids which can be treated by employing the method of the invention is that the operation capacity can vary in a wide range but the tritium concentrations are low, for example lower than 10⁻⁴ or lower than 10⁻⁵ or lower than 10⁻⁷ or lower than 10⁻⁹ as atomic fraction. The systems of the instant invention are based on methods where isotopic exchange between three phases, namely tritiated gas, tritiated water vapours and liquid water is promoted in the presence of at least one of a catalyst or structured packing.

### Definition of terms:

The following description is made for the purpose of illustrating the general principles of the present invention and is not meant to limit the inventive concepts claimed herein. Further, particular features described herein can be used in combination with other described features in each of the various possible combinations and permutations.

Unless otherwise specifically defined herein, all terms are to be given their broadest possible interpretation including meanings implied from the specification as well as meanings understood by those skilled in the art and/or as defined in dictionaries, treatises, etc.

It must also be noted that, as used in the specification and the appended claims, the singular forms "a", "an" and "the" include plural referents unless otherwise specified.

As used herein, the term "about" when combined with a value refers to plus and minus 10% of the reference value unless otherwise specified. For example, a temperature of about 50°C refers to a temperature of 50°C ± 5°C, etc.

Any indications of quantity given in the instant invention are to be considered as indications of quantity by weight, if not specified otherwise.

In the instant invention the term "room temperature" is intended to mean a temperature of 20°C; if not specified otherwise, temperature values are to be considered as degrees centigrade (°C).

In the instant invention the term "and/or" includes any and all combinations of one or more of the associated listed items.

### Detailed description:

In the drawings and description that follows, like parts are marked throughout the specification and drawings with the same reference numerals, respectively. The drawing figures are not necessarily to scale. Certain features of the invention may be shown exaggerated in scale or in somewhat schematic form and some details of conventional elements may not be shown in the interest of clarity and conciseness.

In the instant invention a new device and a new process for water detritiation are provided.

The first subject of the instant invention is a process for the detritiation of tritium enriched water comprising in the given order the steps of
i) performing a combined electrolysis catalytic exchange process which is a combination of a liquid phase catalyst exchange process and an electrolysis of the water,
ii) performing a water distillation,
iii) performing a vapour phase catalytic exchange process,
iv) performing a tritium recovery process, preferably in the form of a cryogenic distillation,
v) optionally performing a second liquid phase catalyst exchange process with at least a part of the exhaust product of step iv) either in the liquid catalyst exchange unit of step i) or in a separate unit.

According to the instant invention, the process of the instant invention can advantageously, but not necessarily, be performed on the instant invention's device.

Accordingly, the second subject of the instant invention is an integrated device for the detritiation of water comprising
a) a combined electrolysis catalytic exchange unit comprising and intake means for tritium enriched water,
   a1) a liquid phase catalytic exchange unit comprising an exit means for tritium free oxygen and
   a2) a water electrolyser unit,
b) a water distillation unit,
c) a vapour phase catalytic exchange unit and
d) a tritium recovery system, comprising exiting means for purified hydrogen, deuterium and tritium.
wherein the tritium-enriched medium is fed into unit a), from there to unit b), from there to unit c) and from there to unit d).

In one embodiment of the instant invention the liquid phase catalytic exchange unit a1) and the water electrolyser unit a2) of the combined electrolysis catalytic exchange unit a) are connected with each other via a re-boiler unit to form the combined electrolysis catalytic exchange unit.

In a preferred embodiment of the instant invention the tritium recovery system is in the form of a cryogenic distillation unit, though other recovery systems are within the scope of the instant invention.

In a further embodiment of the instant invention either one or both of units a1) and b) comprise at least one condenser unit, wherein the at least one condenser unit of unit a1) comprises an exit means for gas release and an intake means for, preferably demineralized, water.

In one embodiment of the instant invention unit b) comprises a re-boiler unit.

In one embodiment of the instant invention at least part of the hydrogen exhaust gas from unit d) is fed back to unit a).

In one embodiment of the instant invention the device comprises a further liquid phase catalytic exchange unit e), preferably comprising a condenser unit, wherein unit e) is located between unit d) and unit b) and through which unit e) hydrogen exhaust gas can be back-fed from unit d) to unit b) and/or to unit a), preferably to unit b).

In one embodiment of the instant invention unit e) comprises an exit means for tritium-free hydrogen and an intake means for, preferably demineralized, water.

In one embodiment of the instant invention unit e) comprises a re-boiler unit.

In one embodiment of the instant invention at least a part water from unit b) is fed back to unit a2).

In one embodiment of the instant invention at least a part of tritium containing medium is fed back from unit c) to unit b), preferably together with the medium that is fed back to unit b) from unit e).

Of course it is possible to combine these various embodiments.

It should be noted, though, that the instant invention's device is not limited to the instant invention's process but may be used for other processes as well.

The invention optimises the configuration of the processes developed for the treatment of the tritiated water and consequently for the tritium recovery from the tritiated water. The instant invention's device and process provide solutions to mitigate the radiological hazards, especially by reducing the amount of tritiated water processed within the system, and by reducing the duty of the system that enriches the tritium in the elemental form.

The instant invention covers the issues related to the processing of tritiated water which is continuously generated and the process effluents are discharged into the environment and provides both an enhanced device a an enhanced process for overcoming the deficiencies and drawbacks of the prior art.

Below some specific embodiments are illustrated, which form particularly preferred embodiments of the instant invention.

Specifically, the various parameters like temperatures, pressures, ratios of the various compounds/media are independent from one another and can each for themselves be applied to the instant invention's process and device or in any combination.

The instant invention's device and method for the water detrition comprise a Combined Electrolysis Catalytic Exchange (CECE) system, comprising a Liquid Phase Catalytic Exchange (LPCE) system and an electrolysis system. Before entering the CECE system, the water from the storage systems, or radioactive waste treatment systems may be chemically treated in order to remove other radionuclides, except tritium, and other types of impurities. The water is fed in a LPCE system where tritium is removed from the gas effluent discharged into the environment. The duty of the CECE, comprising a LPCE and electrolysis processes, is to decrease by several orders of magnitude the tritium concentration in the hydrogen-deuterium effluent stream, resulted from the water decomposition by electrolysis, and to generate a very small flow rate of tritiated water with high tritium concentration. A fraction of the tritiated water from the bottom of the LPCE column may be sent for further processing in the water distillation system (WD). In the WD system, isotopic exchange between the uprising water vapours and downstream water flowing gravitationally from the condenser and feeding water will promote tritium and deuterium enrichment at the bottom of the WD column. Tritium and deuterium depleted vapours are present at the top of the WD column. From the bottom of the WD column, continuously or in batch mode, amounts of tritiated water with high tritium concentration are sent to a Vapour Phase Catalytic Exchange (VPCE) system. In the VPCE system, isotopic exchange between tritiated-deuteriated comprising water vapours and a gas flow takes place. The VPCE process transfers tritium and deuterium from a water vapour stream to a gas stream, wherein at least its tritium concentration is at a lower concentration than the vapour stream.

The gas stream for the VPCE system is supplied from a system that may process the gaseous streams comprising tritium, deuterium and hydrogen - tritium recovery system (TRS). In the inventive configuration, the flow rate of the gas supplied by the TRS may be determined to collect the entire amount of tritium from the tritiated water processed and enriched in tritium within the LPCE and WD systems. The TRS system may be based but not limited to cryogenic distillation or gas chromatography or gas permeation. The TRS system may provide two products, tritium and deuterium gases with various concentrations and as a by-product a stream comprising mainly hydrogen and traces of tritium. This tritiated hydrogen stream from the TRS may be further processed, to remove tritium, before discharging into the environment. A LPCE process is proposed in the instant invention's process to be used as detritiation process for the TRS by-product as a final barrier against tritium discharge in the environment. The tritiated water generated within this system may be processed within the WD system of the instant invention's process.

In some of its various embodiments, the present general inventive concept comprises a Combined Electrolysis Catalytic Exchange (CECE) system, comprising a Liquid Phase Catalytic Exchange (LPCE) system and an electrolysis system. The CECE system receives water from at least one of a detritiation system, storage system, or radioactive waste treatment systems. Before entering the CECE system, the water may be chemically treated in order to remove other radionuclides, except tritium, and other types of impurities in such a way that its conductivity may be generally below 1 µSm/cm. If existing, after purification, a tritium comprising stream 1 is fed at a location in a LPCE column. Within the LPCE column, isotopic exchange takes place between tritiated hydrogen-deuterium containing gas and water vapours, both streams being circulated from the bottom of the column and a liquid water stream flowing from the top of the column gravitationally in counter current with the gaseous and vapour streams. Due to this process, deuterium and tritium concentrations on all streams will be enriched at the bottom of the column. Demineralized water 2 wherein the tritium and deuterium concentration is at natural level or around the natural level is fed at the top of the LPCE1 column. In a preferred embodiment, the molar ratio gas to liquid is between 1 and 4, preferably between 1.5 and 3, more preferably between 1.8 and 2.2 and most preferably equal to 2. Before entering the LPCE1 column, the demineralized water is heated up to the operation temperature of the column which may be in the range of 35-85°C or preferably in the range of 50-70°C.

The tritiated hydrogen-deuterium stream 3 is produced by the electrolysis system 4 which converts at least part of the tritiated water collected at the bottom of the column into a tritiated hydrogen-deuterium comprising stream and an oxygen comprising stream 5. The oxygen stream is diverted, treated in order to remove the tritiated water vapours that are collected and returned in to the electrolysis system, and the oxygen stream can be discharged into the environment as tritium free effluent.
Suitable methods for treating the oxygen stream from the electrolyser are water adsorption on molecular sieves/other adsorbents or scrubbing in a column by counter-current exchange with a flow of natural/demineralized water.

Alternatively this tritium-free oxygen stream can be recovered and utilised as technical oxygen product for various applications such as, but not only, oxygen-enriched oxidiser stream in combustion units, partial oxidation processes, smelting of iron and steel industry, metal cutting and welding, as fuel in rockets, production of chemicals, etc.
Due to the high degree of tritium and deuterium recovery from the gas feed stream, at the top of the LPCE1 column, the gas released into the environment 6 may contain less than 10⁻⁸ or less than 10⁻⁷ or less than 10⁻⁶ or less than 10⁻⁵ or less than 10⁻⁴ from the tritium contained in the feeding tritiated water stream 1 into the LPCE1 column. The tritiated hydrogen-deuterium stream is fed at the bottom of the LPCE1 column and before entering the column is heated up to the LPCE1 column operation. Controlled amount of tritiated water vapours are provided at the bottom of the LPCE1 column to facilitate the isotopic exchange between the gas and liquid phases. The LPCE1 column may be equipped with an electrical re-boiler 7 to provide the amount of vapours needed for isotopic exchange with water. In one embodiment, the amount of vapour corresponds to a loading factor in the range 50-70% from the flooding conditions of the packing of the LPCE1 column.

The LPCE1 column is generally sized and operated to produce at the bottom of the LPCE1 column tritiated water containing, with increasing preferability, 2 times more, or 4 times more, or 10 times more, or 20 times more, or 50 times more, or 100 times more tritium than the feeding tritiated water stream.

In some embodiments the electrolysis system may comprise a solid polymer membrane (SPM) which is damaged by the beta decay of tritium. In these cases, the tritium concentration at the bottom of the LPCE1 column may be in the range 1.1-1000, preferably 1.5-100, more preferably 2-50 higher compared with tritium in the feeding water stream 1 in the LPCE1 column. A fraction of the tritiated water 8 from the bottom of the LPCE1 column may be sent for further processing in the water distillation system (WD) 9. Therefore, complying with tritium mass balance, the flow rate of the tritiated water fed in the WD may be 1.1-1000, preferably 1.5-100, more preferably times lower compared with the flow rate of the tritiated feeding stream 1 in the LPCE1 column.

The WD system may comprise a single distillation column or a cascade of distillation columns. In the following explanations will be given for a single WD column, without limiting the invention to a single column.

In the WD system, isotopic exchange between the uprising water vapours and downstream water flowing gravitationally from the condenser and feeding water will promote tritium and deuterium enrichment at the bottom of the WD column. Tritium and deuterium depleted vapours are present at the top of the WD column.
The WD column may be equipped with an electrical re-boiler 10 to provide the amount of vapours needed for isotopic exchange with water. In one embodiment, the amount of vapour corresponds to a loading factor in the range 50-70% from the flooding conditions of the packing of the WD column. At the top of the WD column, a condenser 11 is implemented to condense the vapours. In some embodiments the condensate may be returned in the column. In some embodiments the condenser may be water cooled. Independently from other operating conditions, the operating pressure of the WD column may be in the range of 50 - 150 kPa, and the temperature may be in the range of 35 - 85°C, preferably in the range of 50 - 70°C.
The WD column may consist of two sections, an enrichment section and a depletion section. The tritium depletion section realises the decreasing of tritium concentration in the water vapours in the range of 1 - 10000, preferably 10 - 1000, more preferably 10 - 100 times compared with the tritium concentration in the feeding water of the WD column.

Besides tritium enrichment in the LPCE1 and WD systems, deuterium is also enriched. In the bottom of the WD column, deuterium concentration may be in the range of 30 - 99%, depending on the amount of deuterium content in the feeding water stream 1 in the LPCE1 column. From the bottom of the WD column, continuously or in batch mode, amounts of tritiated water 12 in the range of 10 - 10000, preferably 20 - 5000, more preferably 500 - 1000 times lower than the molar amount of the tritiated water stream 1 fed in the LPCE1 column are sent to a Vapour Phase Catalytic Exchange (VPCE) system 13. In the VPCE system, isotopic exchange between tritiated-deuteriated comprising, water vapours and a gas flow takes place. The VPCE process transfers tritium and deuterium from a water vapour stream to a gas stream 14, wherein at least its tritium concentration is at a lower concentration than the vapour stream. The VPCE system may comprise a single column or a cascade of columns. In the following explanations will be given for a single VPCE column, without limiting the invention to a single column.
The VPCE system may comprise a boiler, a super heater, a catalyst bed, and a condenser. The boiler and the super heater provide the required amount of vapours at temperature of the process, in some embodiments being in the range of from 200 - 400°C. The catalyst bed realises the isotopic exchange between vapours and gas and the condenser recovers most of the vapours from the gas stream before leaving the VPCE system.

The gas stream 14 for the VPCE process is supplied from a system that may process the gaseous streams comprising tritium, deuterium and hydrogen - tritium recovery system (TRS) 15. The TRS of the instant invention "collects" the entire amount of tritium from the tritiated water processed within the LPCE1 and WD systems. Within the VPCE system, the incoming gas stream 14 from the TRS with low tritium atomic concentration compared with the atomic concentration of the water vapours increases its tritium concentration while passing the catalyst bed. The operation conditions that determine the amount of tritium transferred between vapours and gas are the temperature of the catalyst bed and the molar ratio between vapours and liquid flow rates on the catalyst bed. The temperature of the catalyst bed is the range of 200 - 400°C, preferably 250 to 350°C. In the instant invention's process, the TRS provides the gas stream to the VPCE system at a molar ratio gas to vapours inside the VPCE catalyst bed higher than 5:1, in some embodiments the molar ratio gas to vapours inside the VPCE catalyst bed is between 5:1 and 50:1. This molar ratio implies low gas flow rate circulated from the TRS, beneficially from the operational point of view, but the invention is not limited to this value. The TRS comprise a gas processing system wherein tritium is enriched up to levels typically above 10%, preferably 20%, more preferably 50%, most preferably 90% which make it suitable for further use, such as, but not limited to, cryogenic distillation or gas chromatography or permeation or other isotopic separation processes. The TRS may comprise one or a cascade of cryogenic distillation columns. In one embodiment, the internal molar circulation of the CD columns is higher than the molar flow of the gas circulated within the VPCE system. After circulation within the VPCE system, the gas enriched in tritium 16 maybe purified over a membrane permeator and further processed within the TRS system.

Within the TRS system, hydrogen, deuterium and tritium at various concentrations are present in gaseous form. The TRS provides deuterium 17 and tritium 18 as products and hydrogen as exhaust gas 19 comprising a small deuterium concentration, which in some cases may be above the natural level, and also comprising traces of tritium. Since tritium in the exhaust gas 19 from the TRS system can be a concern for the environment, in one preferred embodiment the exhaust gas 19 is further processed. This can be processed in a liquid phase catalytic exchange column LPCE which provides a second barrier against tritium release into the environment. This LPCE column might be LPCE1 or an additional LPCE2 column. Preferably an additional LPCE2 column 20 is considered and in the following description is provided for this embodiment. Demineralized water 21 is fed at the top of the LPCE2 column that provides molar ratio liquid to gas higher than 2:1, preferably higher than 3:1, more preferably higher than 4:1. The LPCE2 column is designed to achieve a decontamination factor, defined as the ratio between the tritium concentration of the incoming gas and the exhausted gas, higher than nine orders of magnitude (10⁹), preferably higher than ten orders of magnitude (10¹⁰), more preferably higher than eleven orders of magnitude (10¹¹).
The water 22 collected at the bottom of the LPCE2 column which contains traces of tritium is sent for processing either in the WD system or in the LPCE1 column. In a preferred embodiment, the water collected at the bottom of the LPCE2 column is sent for processing in the WD system. This water has a deuterium concentration in the same range of deuterium concentration as the WD system. For this reason, this configuration is preferred in order to avoid the build-up of deuterium in the LPCE1 column.
In the embodiment wherein the water collected at the bottom of the LPCE2 column is recycled to LPCE1 column, the flow rate of the tritiated water collected at the bottom of the LPCE2 column is at least 50 times, preferably 100 times, more preferably 1000 times lower than the feed in the first LPCE1 column. Therefore, the impact on the processing of the LPCE1 column is negligible for this option.

The instant invention has some decisive advantages over the prior art, which are as follows:
- All processes aiming at the treatment of tritiated water and eventual recovery of tritium require at least one step that enriches tritium and reduce the amount of fluids that need further processing. One of the advantages of the instant invention's device/process is that tritium enrichment is produced mainly in the water distillation system (WD) and only the pre-enrichment is realised in the LPCE1 column. Therefore, the tritium concentration in the tritiated water at the bottom of the LPCE1 column and consequently in the electrolysis system is lower compared with processes in which a liquid phase isotopic exchange process is solely used for tritium enrichment in the water. In the instant invention, the life time of the electrolysis is increased due to the reduction of exposure to beta-decay of tritium for all the internals and components of the electrolysis system. This advantage is particularly important in the cases when a solid polymer membrane is used in the electrolysis system. Also when the electrolysis system is employing a classical liquid electrolyte, this is beneficial, as the contamination is reduced.
   Consequently, the hazards concerning the radioactive contamination during normal operation of the process and also during the maintenance activities are lower for the device/process of the instant invention.
- The highest tritium concentration in the inventive configuration is achieved in the tritiated water from the bottom of the WD column. In the comparative cases wherein liquid phase isotopic exchange process is solely used for tritium enrichment in the water and no water distillation is present, the highest tritium concentration is achieved in the electrolysis system. The liquid hold-up of the WD re-boiler is at least two orders of magnitudes lower than the water hold-up of the electrolysis system. Consequently, the hazards of radioactive contamination during normal operation of the process and also during the maintenance activities are lower for the configuration of the instant invention.
- Higher tritium decontamination along the LPCE1 column may be achieved due to low deuterium concentration within the LPCE1 column. In the cases where water detritiation is limited to the CECE system, beside tritium enrichment at the bottom of the LPCE1 column, heavy water and tritiated heavy water is produced due to unavoidable deuterium enrichment. The equilibrium constant for the reaction HT+H₂O = HTO +H₂ is 5.017 at a temperature of 60°C. When deuterium is present in a significant amount, tritium has to be separated from the companion tritiated heavy water. The equilibrium constant of the reaction DT+D₂O = DTO+D₂ is, at the same temperature of 60°C, 1.531. This has the effect that the tritium decontamination of the effluent gas is decreased in the presence of deuterium due the low separation effect. Consequently, in the instant invention where deuterium is mainly enriched in the WD system, a smaller LPCE1 column is sufficient to achieve the same decontamination factor.
- Virtually zero gas flow rates are needed to be sent to the final step for the final tritium enrichment and recovery, i.e., virtually zero gas flow rate transferred to the TRS in view of tritium recovery. The tritium is transferred to the TRS by increasing the tritium concentration of the gas circulated from the TRS and returned at the same flow rate to the TRS after changing its tritium and deuterium concentration. The TRS may be designed at small processing capacity with high benefits concerning the tritium inventory, reduction of nuclear hazards and capacity. If TRS is based on cryogenic distillation the cryogenic cooling power can be minimised with benefits on investment and operation costs.

Accordingly, the final tritium enrichment process may be designed at small processing capacities with high benefits concerning the tritium inventory, reduction of nuclear hazards and capacities.

Particular advantages of the instant invention are:
- Radioactive mixed waste (comprising besides tritiated water other tritiated inorganic or organic compounds) is minimised from the point of view of tritium concentration is concerned.
- The tritium concentration in the effluents from the system of the invention can be reduced, which assures both better total tritium recovery and minimisation of the requirements for further purification stages and release into the environment.
- From the technological point of view, the duty, size and power consumption of the final enrichment/tritium recovery stages in gas phase can be reduced.

One particularly preferred subject matter of the instant invention is an integrated device for the detritiation of water comprising
a) a combined electrolysis catalytic exchange unit comprising and intake means for tritium enriched water,
   a1) a liquid phase catalytic exchange unit with an exit means for tritium free oxygen and a condenser unit which comprises an exit means for gas release and an intake means for, preferably demineralized, water
      which unit a1) is connected via a re-boiler with
   a2) a water electrolyser unit,
b) a water distillation unit comprising a condenser unit which comprises a re-boiler unit,
c) a vapour phase catalytic exchange unit and
d) a cryogenic distillation unit as tritium recovery system, comprising exiting means for purified hydrogen, deuterium and tritium.
   wherein the tritium-enriched medium is fed into unit a), from there to unit b), from there to unit c) and from there to unit d),
e) a further liquid phase catalytic exchange unit comprising an exit means for tritium-free hydrogen and an intake means for, preferably demineralized, water, comprising a re-boiler unit and comprising a condenser unit, wherein unit e) is located between unit d) and unit b) and through which unit e) the exhaust tritium containing medium can be back-fed from unit d) to unit b) and/or to unit a), preferably to unit b),
f) optionally comprising a means for feeding back at least part of the exhaust tritium containing medium from unit d) to unit a),
g) a means for feeding back at least a part of the water from unit b) to unit a2)
h) a means for feeding back at least a part of tritium containing medium from unit c) to unit b), preferably together with the medium that is fed back to unit b) from unit e).

A further particularly preferred embodiment of the instant invention is a process for the detritiation of tritium enriched water comprising in the given order the steps of
i) performing a combined electrolysis catalytic exchange process which is a combination of a liquid phase catalyst exchange process and an electrolysis of the water,
ii) performing a water distillation,
iii) performing a vapour phase catalytic exchange process,
iv) performing a tritium recovery process by cryogenic distillation,
v) optionally performing a second liquid phase catalyst exchange process with at least a part of the exhaust product of step iv) either in the liquid catalyst exchange unit of step i) or in a separate unit,
wherein the process is carried out with an integrated device comprising
a) a combined electrolysis catalytic exchange unit comprising and intake means for tritium enriched water,
   a1) a liquid phase catalytic exchange unit with an exit means for tritium free oxygen and a condenser unit which comprises an exit means for gas release and an intake means for, preferably demineralized, water
      which unit a1) is connected via a re-boiler with
   a2) a water electrolyser unit,
b) a water distillation unit comprising a condenser unit which comprises a re-boiler unit,
c) a vapour phase catalytic exchange unit and
d) a cryogenic distillation unit as tritium recovery system, comprising exiting means for purified hydrogen, deuterium and tritium.
   wherein the tritium-enriched medium is fed into unit a), from there to unit b), from there to unit c) and from there to unit d),
e) a further liquid phase catalytic exchange unit comprising an exit means for tritium-free hydrogen and an intake means for, preferably demineralized, water, comprising a re-boiler unit and comprising a condenser unit, wherein unit e) is located between unit d) and unit b) and through which unit e) the exhaust tritium containing medium can be back-fed from unit d) to unit b) and/or to unit a), preferably to unit b),
f) optionally comprising a means for feeding back at least part of the exhaust tritium containing medium from unit d) to unit a),
g) a means for feeding back at least a part of the water from unit b) to unit a2)
h) a means for feeding back at least a part of tritium containing medium from unit c) to unit b), preferably together with the medium that is fed back to unit b) from unit e).

The instant invention's process may be applied to the treatment of tritiated water from nuclear power plants and tritium processing facilities.

It should be noted that not all details of the various connections, valves etc are given in the description. However, these are such as are generally known to those skilled in the art and a such need not be described in detail.

The various embodiments of the instant invention, including those of the dependent claims, can be combined with each other in any desired manner.

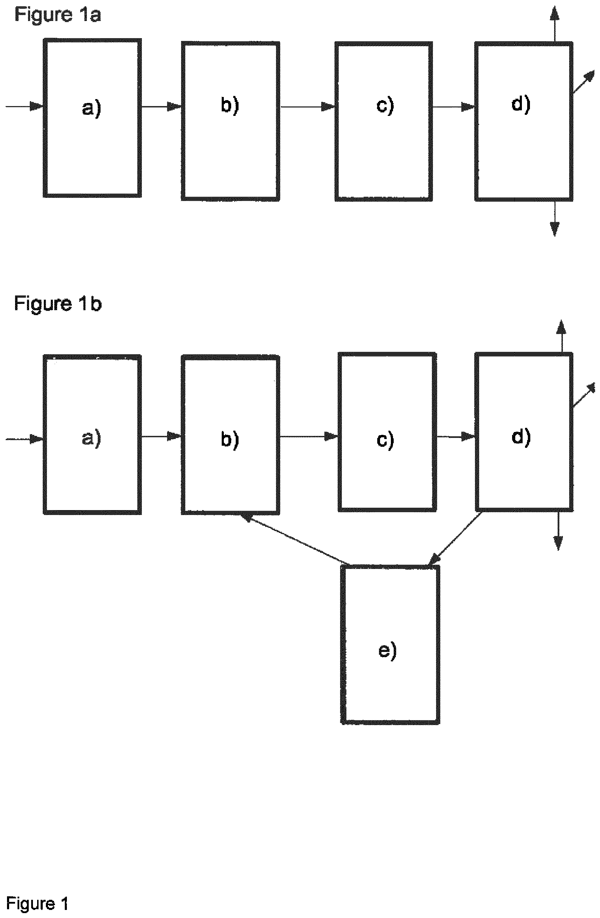

Figure 1 shows two simplified block-diagrams of the integrated device according to the invention, wherein figure 1b) shows a preferred device, adding the unit e) over the more general device an figure 1a).

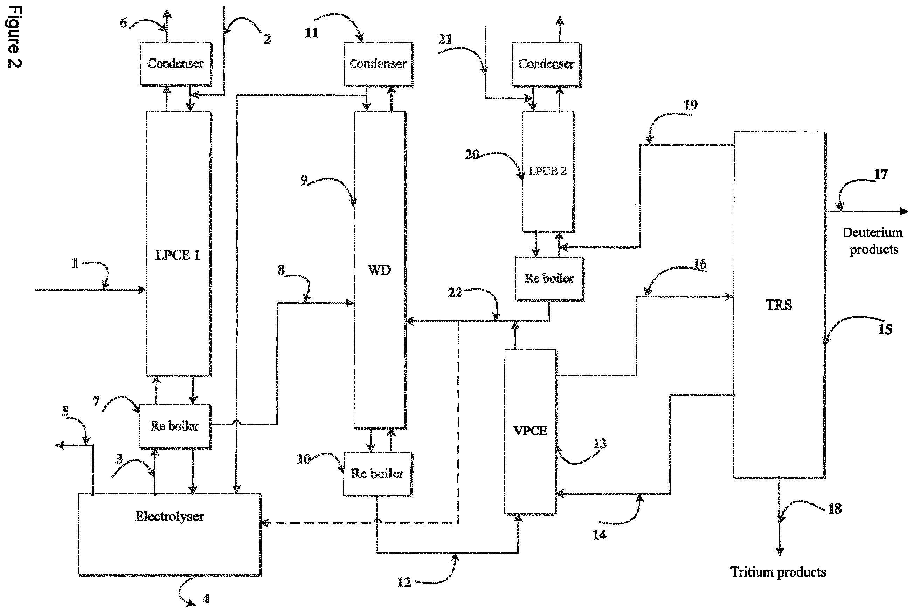

Figure 2 shows a very specific embodiment of the instant invention, representing the most preferred embodiment.

## Claims

1. Integrated device for the detritiation of water comprising
a) a combined electrolysis catalytic exchange unit comprising and intake means for tritium enriched water,
a1) a liquid phase catalytic exchange unit comprising an exit means for tritium free oxygen and
a2) a water electrolyser unit,
b) a water distillation unit, optionally comprising a re-boiler unit,
c) a vapour phase catalytic exchange unit and
d) a tritium recovery system, comprising exiting means for purified hydrogen, deuterium and tritium.
wherein the tritium-enriched medium is fed into unit a), from there to unit b), from there to unit c) and from there to unit d).

2. Integrated device according to claim 1, **characterised in that** the liquid phase catalytic exchange unit a1) and the water electrolyser unit a2) of the combined electrolysis catalytic exchange unit a) are connected with each other via a re-boiler unit.

3. Integrated device according to claim 1 or 2, **characterised in that** the tritium recovery system d) comprises or consists of a cryogenic distillation unit.

4. Integrated device according to any one of claims 1 to 3, **characterised in that** either one or both of units a1) and b) comprise at least one condenser unit and wherein the at least one condenser unit of unit a1) comprises an exit means for gas release and an intake means for, preferably demineralized, water.

5. Integrated device according to any one of claims 1 to 4, **characterised in that** at least part of the hydrogen exhaust gas from unit d) is fed back to unit a).

6. Integrated device according to any one of claims 1 to 5, **characterised in that** it comprises a further liquid phase catalytic exchange unit e), preferably comprising a condenser unit, wherein unit e) is located between unit d) and unit b) and through which unit e) the exhaust tritium containing medium can be back-fed from unit d) to unit b) and/or to unit a), preferably to unit b).

7. Integrated device according to claim 6, **characterised in that** unit e) comprises an exit means for tritium-free hydrogen and an intake means for, preferably demineralized, water.

8. Integrated device according to any one of claims 1 to 7, **characterised in that** unit e) comprises a re-boiler unit.

9. Integrated device according to any one of claims 1 to 8, **characterised in that** at least a part water from unit b) is fed back to unit a2).

10. Integrated device according to any one of claims 1 to 9, **characterised in that** at least a part of tritium containing medium is fed back from unit c) to unit b), preferably together with the medium that is fed back to unit b) from unit e).

11. Integrated device according to any one of claims 1 to 10, **characterised in that** the water electrolyser unit a2) comprises a means for removing and diverting an oxygen stream and that the device further comprises a means for treating the removed oxygen stream in order to remove the tritiated water vapours that are collected and either one or all of the following means aa), bb) and/or cc):
aa) for returning the oxygen stream in to the electrolysis system,
bb) for discharging the oxygen stream into the environment as tritium free effluent,
cc) for recovering the oxygen stream,
wherein the treating of the removed oxygen stream is preferably done by water adsorption on molecular sieves/other adsorbents or scrubbing in a column by counter-current exchange with a flow of natural/demineralized water.

12. Process for the detritiation of tritium enriched water comprising in the given order the steps of
i) performing a combined electrolysis catalytic exchange process which is a combination of a liquid phase catalyst exchange process and an electrolysis of the water,
ii) performing a water distillation,
iii) performing a vapour phase catalytic exchange process,
iv) performing a tritium recovery process,
v) optionally performing a second liquid phase catalyst exchange process with at least a part of the exhaust product of step iv) either in the liquid catalyst exchange unit of step i) or in a separate unit.

13. Process according to claim 12, **characterised in that** the tritium recovery process of step iv) is a cryogenic distillation.

14. Process according to any one of claims 12 and 13, **characterised in that** a device according to any one of claims 1 to 11 is used.

## Patentansprüche

1. Integrierte Vorrichtung for die Detritiierung von Wasser enthaltend
a) eine kombinierte elektrolyse-katalytische Austauscheinheit enthaltend eine Eintrittsmöglichkeit für mit Tritium angereichertem Wasser,
a1) eine katalytische Flüssigkeitphasenaustauscheinheit, enthaltend eine Austrittsmöglichkeit für tritiumfreien Sauerstoff und
a2) eine Wasserelektrolyseeinheit,
b) ein Wasserdestillationseinheit, die gegebenenfalls eine Verdampfereinheit enthält,
c) eine katalytische Dampfphasenaustauscheinheit und
d) ein Tritiumwiedergewinnungssystem, welches eine Austrittsmöglichkeit für gereinigten Wasserstoff, Deuterium und Tritium enthält,
wobei das mit Tritium angereicherte Medium in die Einheit a) eingebracht wird, von dort zu Einheit b), von da zu Einheit c) und von dort zu Einheit d).

2. Integrierte Vorrichtung gemäß Anspruch 1, **dadurch gekennzeichnet, dass** die katalytische Flüssigkeitsphasenaustauscheinheit a1) und die Wasserelektrolyseeinheit a2) der kombinierten elektrolyse-katalytischen Austauscheinheit a) über die Verdampfereinheit miteinander verbunden sind.

3. Integrierte Vorrichtung gemäß Anspruch 1 oder 2 , **dadurch gekennzeichnet, dass** das Tritiumwiedergewinnungsystem d) eine kryogene Destillationseinheit enthält oder daraus besteht.

4. Integrierte Vorrichtung gemäß einem der Ansprüche 1 bis 3, **dadurch gekennzeichnet, dass** entweder eine oder beide Einheiten a1) and b) mindestens eine Kondensatoreinheit umfassen und dass die wenigstens eine Kondensatoreinheit von Einheit a1) wenigstens eine Austrittsmöglichkeit für die Gasfreisetzung und eine Eintrittsmöglichkeit für, vorzugsweise demineralisiertes, Wasser umfasst.

5. Integrierte Vorrichtung gemäß einem der Ansprüche 1 bis 4, **dadurch gekennzeichnet, dass** wenigstens ein Teil des Wasserstoffabgases von Einheit d) zu Einheit a) zurück geführt wird.

6. Integrierte Vorrichtung gemäß einem der Ansprüche 1 bis 5, **dadurch gekennzeichnet, dass** sie eine weitere katalytische Flüssigkeitsphasenaustauscheinheit e) umfasst, vorzugsweise eine Kondensatoreinheit, wobei Einheit e) zwischen Einheit d) und Einheit b) angeordnet ist und durch die Einheit e) dass das Abfalltritium enthaltende Mittel zurück geführt werden kann von Einheit d) zu Einheit b) und/oder zu Einheit a), bervorzugt zu Einheit b).

7. Integrierte Vorrichtung gemäß Anspruch 6, **dadurch gekennzeichnet, dass** die Einheit e) eine Austrittsmöglichkeit enthält für tritiumfreien Wasserstoff sowie eine Eintrittsmöglichkeit für, vorzugsweise demineralisiertes, Wasser.

8. Integrierte Vorrichtung gemäß einem der Ansprüche 1 bis 7, **dadurch gekennzeichnet, dass** Einheit e) eine Verdampfereinheit enhält.

9. Integrierte Vorrichtung gemäß einem der Ansprüche 1 bis 8, **dadurch gekennzeichnet, dass** wenigstens ein Teil des Wassers von Einheit b) zu Einheit a2) zurück geführt wird.

10. Integrierte Vorrichtung gemäß einem der Ansprüche 1 bis 9, **dadurch gekennzeichnet, dass** wenigstens ein Teil des das Tritium enthaltende Mittel zurück geführt wird von Einheit c) zu Einheit b), bevorzugt zusammen mit dem Mittel, welches zurückgeführt wird zu Einheit b) von Einheit e).

11. Integrierte Vorrichtung gemäß einem der Ansprüche 1 bis 10, **dadurch gekennzeichnet, dass** die Wasserelektrolyseeinheit a2) ein Mittel enthält zum Entfernen und Umleiten eines Sauerstoffstroms und dass die Vorrichtung weiterhin eine Möglichkeit enthält zur Behandlung des entfernten Sauerstoffstroms, um die gesammelten Tritiumwasserdämpfe zu entfernen und entweder eine oder alle der folgenden Möglichkeiten aa), bb) und/oder cc):
aa) zur Rückführung des Sauerstoffstroms in das Elektrolysesystem,
bb) zur Abführung des Sauerstoffstroms in die Umwelt als tritiumfreie Ableitung,
cc) zur Rückgewinnung des Sauerstoffstroms,
wobei die Behandlung des entfernten Sauerstoffstroms vorzugsweise vorgenommen wird durch die Adsorption von Wasser auf molekularen Sieben/anderen Adsorbtionsmitteln oder Waschen in einer Säule durch Gegenstromaustausch mit einem Strom von natürlichem/demineralisierten Wasser.

12. Verfahren für die Detritiierung von mit Tritium angereichertem Wasser, welches in der genannten Abfolge die Schritte umfasst:
i) Durchführung eines kombinierten elektrolyse-katalytischen Austauschverfahrens, welches eine Kombination eines katalytischen Flüssigkeitphasenaustauschprozesses ist und einer Elektrolyse des Wassers,
ii) Durchführung einer Wasserdestillation,
iii) Durchführung eines katalytischen Dampfphasenaustauschprozesses,
iv) Durchführung eines Tritiumwiedergewinnungsprozesses,
v) gegebenenfalls Durchführung eines zweiten katalytischen Flüssikeitsphasenaustauschprozesses mit zumindest einem Teil des Abfallproduktes von Schritt iv) entweder in der katalytischen Flüssigkeitsaustauscheinheit von Schritt i) oder in einer separaten Einheit.

13. Verfahren gemäß Anspruch 12, **dadurch gekennzeichnet, dass** der Tritiumwiedergewinnungsprozess von Schritt iv) eine kryogene Destillation ist.

14. Verfahren gemäß einem der Ansprüche 12 und 13, **dadurch gekennzeichnet, dass** eine Vorrichtung gemäß einem der Ansprüche 1 bis 11 verwendet wird.

## Revendications

1. Dispositif intégré pour la détritiation d'eau comprenant
a) une unité combinée d'échange catalytique par électrolyse comprenant un moyen d'entrée pour l'eau tritiée,
a1) une unité d'échangeur catalytique en phase liquide compenant un moyen de sortie pour l'oxygène exempt de tritium et
a2) une unité pour l'électrolyse d'eau
b) une unité pour la distillation d'eau, le cas échéant comprenant une unité d 'évaporateur,
c) une unité d'échange de phase vapeur et
d) un système de récupération de tritium, comprenant un moyen de sortie pour l'hydrogène, deuterium et tritium purifié,
où le medium enrichi avec le tritium est introduit dans l'unité a), à partir de cela à l'unité b), à partir de cela à l'unité c) et à partir de cela à l'unité d).

2. Dispositif intégré selon la revendication 1, **caractérisé en ce que** l'unité d'échangeur catalytique en phase liquide 1a) et l'unité d'électrolyse d'eau 2a) de l'unité combinée d'échange catalytique par électrolyse a) sont liées l'une avec l'autre par l'unité d'évaporateur.

3. Dispositif intégré selon la revendication 1 ou 2, **caractérisé en ce que** le système de récupération de tritium d) contient une ou consiste d'une unité cryogénique de distillation.

4. Dispositif intégré selon l'une quelconque des revendications 1 à 3, **caractérisé en ce que** l'une ou deux des unités a1) et b) comprennent au moins une unité de condensation et où la au moins une unité de l'unité de condensation a1) comprend un moyen de sortie de gaz et un moyen d'entrée pour l'eau, de préférence déminéralisée.

5. Dispositif intégré selon l'une quelconque des revendications 1 à 4, **caractérisé en ce qu'** au moins un part de l'unité de l'échappement d' hydrogène de l'unité d) est reconduit à l'unité a).

6. Dispositif intégré selon l'une quelconque des revendications 1 à 5, **caractérisé en ce qu'**il comprend une autre unité d'échangeur catalytique en phase liquide e), de préférance comprenant une unité de condensation, où l'unité e) est située entre l'unité d) et l'unité b) et par l'unité e) le moyen contenant les déchets de tritium peut être reconduit de l'unité d) à l'unité b) et/ou à l'unité a), de préférence à l'unité b).

7. Dispositif intégré selon la revendication 6, **caractérisé en ce que** l'unité e) comprend un moyen de sortie d'oxygène exempt de tritium et un moyen d'entrée pour l'eau, de préférence déminéralisée.

8. Dispositif intégré selon l'une quelconque des revendications 1 à 7, **caractérisé en ce que** l'unité e) comprend une unité d'evaporateur.

9. Dispositif intégré selon l'une quelconque des revendications 1 à 8, **caractérisé en ce que** le au moins part d'eau de l'unité b) est reconduit à l'unité a2).

10. Dispositif intégré selon l'une quelconque des revendications 1 à 9, **caractérisé en ce qu'**au moins un part du medium contenant le tritium est reconduit de l'unité c) à l'unité b), de préférence ensemble avec le medium que est reconduit à l'unité b) de l'unité e).

11. Dispositif intégré selon l'une quelconque des revendications 1 à 10, **caractérisé en ce que** l'unité d'éléctrolyse d'eau 2a) comprend un moyen pour éloigner et distribuer un courant d'oxygène et **en ce que** le dispositif en outre comprend un moyen de traitement le courant d'oxygène éloigné pour éloigner les vapeurs d'eau tritiée que sont collectés , et ou bien un ou bien tous les moyens aa), bb) and/or cc) suivants:
aa) pour retourner le courant d' oxygène dans le système d'éléctrolyse,
bb) pour décharger le courant d'oxygène dans l'environnement comme effluent exempt de tritium,
cc) pour récupérer le courant d'oxygène,
et où le traitement du courant d'oxygène remouvé est fait de préférence par adsoption d'eau sur des tamis moléculaires/autres adsorbants ou lavage dans une colonne par échange de contre-courrent avec une fleuve d'eau naturelle/déminéralisée.

12. Procédé pour la detritiation d'eau enrichie de tritium comprenant les étapes dans l'ordre suivant de:
i) exécuter un procédé combinée d'échange catalytique par électrolyse que est une combination d'un procédé d'échangeur catalytique en phase liquide et d'une électrolyse d'eau,
ii) exécuter une distillation d'eau,
iii) exécuter un procédé d'échange catalytique de phase vapeur,
iv) exécuter un procédé de récupération de tritium,
v) le cas échéant exécuter un second procédé d'échangeur catalytique en phase liquide avec au moins un part du sous-produit d'étape iv), ou bien dans l'unité i) d'échanger catalytique en phase liquide ou bien dans une unité séparée.

13. Procédé selon la revendication 12, **caractérisé en ce que** le procès de récupération de tritium d'étape iv) est une distillation cryogénique.

14. Procédé selon l'une quelconque des revendications 12 et 13, **caractérisé en ce qu'**un dispositif selon l'une quelconque des revendications 1 à 11 est utilisé.
